# EUROPEAN PATENT APPLICATION

(11) **EP 1 832 465 A2**
(43) Date of publication of application: **12.09.2007**
(21) Application number: 07004298.1
(22) Date of filing: 02.03.2007
(51) Int. Cl.: B60L 1/00

(54) **Motor vehicle comprising an internal combustion engine and an auxiliary fuel cell power plant and method for operating the same**

(30) Priority: 09.03.2006 WO PCT/US2006/008378
(71) Applicant: Bayerische Motoren Werke Aktiengesellschaft, 80809 München (DE); UTC Fuel Cells, LLC, South Windsor, CT 06074 (US)
(72) Inventor: Strobl, Wolfgang, 85072 Eichstätt (DE); LaRocco, Melanie A., Manchester, CT 06040 (US); Falkenberg, Ingo, 81539 München (DE); Steinbugler, Margaret M., East Windsor, CT 06088 (US)
(74) Representative: Schmidt, Günter H. H.

(57) **Abstract**

The invention relates to a motor vehicle comprising an internal combustion engine driving the motor vehicle, also comprising an auxiliary fuel cell power plant (2) mounted in the vehicle; the latter comprising a battery (4) for providing start up power for said auxiliary fuel cell power plant, the vehicle further comprising an electric powered starter for the internal combustion engine, wherein the electrical power from said auxiliary fuel cell power plant can be directed to said starter to activate the latter to start the internal combustion engine, as the electric capacity of said battery is not sufficient for driving said starter in starting the engine. The motor vehicle may further comprise a converter (8) operatively connected to said auxiliary fuel cell power plant for converting the voltage output of said auxiliary fuel cell power plant to a lower voltage, in particular to a twelve volt output. When power from said auxiliary fuel cell power plant is insufficient by itself to start the vehicle engine, the motor vehicle may further comprise at least one supplemental source (18) of electrical power selectively connected to said starter. Said supplemental source of electrical power includes one or more capacitors, in particular super capacitors.

## Description

The present invention relates to a motor vehicle comprising an internal combustion engine driving the motor vehicle, also comprising an auxiliary fuel cell power plant mounted in the vehicle, the latter comprising a battery for providing start up power for said auxiliary fuel cell power plant; the vehicle further comprising an electric powered starter for the internal combustion engine. Further the invention relates to a method for operating such a vehicle. In particular the auxiliary fuel cell power plant may consist of a polymer electrolyte membrane (PEM) fuel cell auxiliary power plant for operating auxiliary equipment in the vehicle, such as an air conditioner, a heater, radio, and the like.

Polymer electrolyte membrane fuel cell assemblies are relatively low temperature low operating pressure fuel cell assemblies that utilize a catalyzed polymer membrane electrolyte to process air and a hydrogen-rich fuel to produce electricity and water. PEM fuel cells are well suited for use in mobile applications such as automobiles, buses, trucks, and the like, because they are relatively compact, light in weight and operate at essentially ambient pressure. PEM fuel cell power plants include a conventional catalyzed polymer membrane electrode having an anode side which receives a hydrogen-rich fuel stream and a cathode side which receives an air reactant stream. A coolant flow field is disposed in heat exchange relationship with the cathode side of the fuel cells so as to cool the fuel cells during operation thereof. The coolant used in PEM fuel cell power systems is typically water.

It has been proposed to use relatively small PEM power plants in internal combustion engine-powered vehicles for providing power to operate auxiliary electrical equipment in the vehicles, such as a radio, an air conditioner, a heater, the headlights and taillights, and the like. These small fuel cell power plants are used as an adjunct to the conventional 12 volt battery used in the vehicle to start the vehicle's internal combustion engine via an electric powered starter and also to provide electricity to operate the auxiliary electrical equipment of the vehicle.

Further reference as to prior art is made to US 2006/0021808 A1 or to US 2002/0056580 A1 e.g. The document mentioned first discloses a hybrid vehicle which includes an electric motor and an internal combustion engine. A high voltage battery provides power to drive the electric motor and therefore to operate the vehicle. This battery may also provide power to drive a generator which in this document is referred to as an electric machine. This electric machine or generator is operatively connected to the engine through a gear box. Thus the generator appears to be the equivalent of a starter for the internal combustion engine. For example, a device such as a capacitor can be used, which, like a high voltage battery, is capable of both storing and outputting electrical energy. (Alternatively) A fuel cell may be used in conjunction with the battery and/or capacitor to provide electrical power for the vehicle.

Document US 2002/0056580 A1 discloses a motor vehicle having an auxiliary power unit (APU) that includes a gas generator and a fuel cell stack. The motor vehicle also includes an internal combustion engine and a battery, the latter supplying startup power for the engine. The fuel cell stack operates an air conditioning unit in the vehicle, and can be used to recharge the battery if need be. The battery can also be used to provide power to start the fuel cell stack up.

It is an object of the present invention to provide a measure which reduces the complexity in a vehicle according the preamble of the independent claims. The addressing of this aim comprises the features of the independent claims 1 or 6.

It is proposed to eliminate the need for large and bulky conventional 12 volt batteries in vehicles and use compact light weight auxiliary PEM fuel cells as the main source of electricity to both start the vehicle respectively its engine and to power the electrical equipment in the vehicle both during pre-startup and while the vehicle is being operated. Of course there will be still need for a small battery for starting up the fuel cell power plant, however this small battery is unable to provide sufficient electrical power for driving the internal combustion engine's starter in starting the engine. For example or typically the conventional 12 Volt battery of an automobile (passenger car) has a capacity of about 55 Ah (ampere-hours), the maximum discharge current being about 200 ampere up to 450 ampere. The electrical power provided corresponds to 2000 watt up to 4000 watt. The small and single 12 volt battery according to the invention however, which is intented for starting up the fuell cell stack may have (or has preferably) a capacity of about 0,3 Ah (ampere-hours), the maximum discharge current being about 20 ampere and the electrical power provided corresponds to only 200 watt.

This invention proposes to the use of PEM type of fuel cell assemblies in internal combustion engine-powered vehicles to provide electricity for operating auxiliary electrical equipment in the vehicles, such as air conditioners, heaters, head lights and tail lights, and any other electrical systems which are presently powered by conventional large twelve volt batteries and also for starting the vehicle so as to render the large twelve volt battery unnecessary. The PEM fuel cell power systems which are suitable for use in conjunction with this invention are typically relatively small power systems that will produce nominally forty two volts of electrical output when in operation. These power systems will include about fifty or so cells to produce the desired power levels. The PEM power plants can utilize pure hydrogen as a fuel source for the production of electricity.

The fuel cell power plant operating system can include a DC to DC converter which will convert the voltage produced by the PEM cell assembly to a voltage appropriate for use in the vehicle. The operating system will also include a small battery (already mentioned) which will provide the power necessary to start operation of the PEM cell assembly. The PEM cell assembly can be activated prior to starting the vehicle so as to provide preliminary heating or cooling of the vehicle prior to use so desired. The operating system can also include one or more super capacitors which can be selectively connected to the vehicle starter if necessary. The super capacitors can be charged by the PEM cell assembly during periods of normal operation of the vehicle.

The normal operating procedure for the operating system is first to start the PEM cell assembly with the small battery (see above). After an initial time period whereupon the PEM cell assembly will be connected to the vehicle starter to start the vehicle resp. its engine, or to energize selected ones of the vehicle's auxiliary electrical devices, as noted above, prior to starting the vehicle. In the event that the charge from the fuel cells is insufficient to turn the starter over, the system will use one or more of the super capacitors in conjunction with the fuel cells to provide the necessary short burst of high energy needed to start the vehicle's internal combustuion engine.
Once the vehicle's engine starts, the fuel cell power plant can be switched to a lower power level for continued operation as the vehicle/engine is driven. As noted above, energy from the fuel cell power plant can be used to recharge the super capacitors in the event that their use was necessary to start the vehicle.

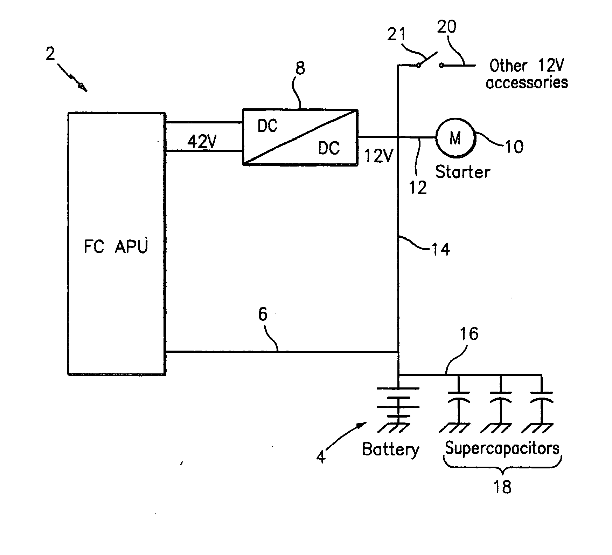

Certain objects and advantages of this invention will become more readily apparent to one skilled in the art from the following description of a preferred embodiment of the invention when taken in conjunction with the accompanying drawing which is a schematic view of a vehicle startup and operating power system which utilizes a PEM fuel cell assembly for the electrical energy needed to operate the vehicle.

Referring to the drawing there is shown a schematic view of a vehicle startup and operating power system which utilizes a PEM fuel cell assembly and system for providing the electrical energy needed to start and operate all of the electrical equipment in the vehicle. The fuel cell power plant stack is denoted generally by the numeral 2, and as noted above, is a relatively small unit that has about fifty or so cells in it. A small dry cell battery 4 (12 volt, max. 0,3 Ah) is operatively connected to the stack 2 via a line 6. The battery 4 is used to start up the stack 2 by activating any fans and pumps which form a part of the stack 2. The battery 4 can be selectively activated by a switch (not shown). Once activated, the electrical output from the stack 2 will be in the range of about thirty to fifty volts DC, and preferably about forty two volts.

As the vehicle's electrical equipment operates as conventionally with a voltage of 12 volt, the voltage from the stack 2 will be directed to a DC/DC voltage converter 8 which has a twelve volt output that is suitable for operating the vehicle's electric equipment. The starter 10 of the vehicle is connected to the converter 8 through a line 12. A bank of super capacitors 18 is connected to a line 16 which, in turn, is connected to a line 14 leading to the starter 10 via line 12 and also to the converter 8. If however the vehicle operates with a higher voltage electrical system, such as with the forty two volt output of the stack 2, the converter 8 can be eliminated from the startup system, and the voltage output of the stack 2 can be used to power the starter and the auxiliary electrical equipment in the vehicle.

The system operates as follows: To begin vehicle and the vehicle's internal combustion engine startup, a switch is activated which connects the small battery 4 to the fuel cell stack 2 thereby beginning operation of the stack 2 and generating electricity that is fed to the converter 8. After a ramp up time period, the stack 2 is brought up to a maximum current output stage and the converter 8 is electrically connected to the starter 10 so as to activate the latter to start the internal combustion engine of the vehicle. There may be ambient conditions, such as subfreezing temperatures, that may hinder operation of the starter 10 by the current derived solely from the stack 2. In those cases, current from the stack 2 and from one or more of the super capacitors 18 will be combined and directed to the starter 10. Once the vehicle resp. its engine is started, a switch 21 in the line 20 is closed so as to provide power to all of the other electrical appliances in the vehicle.

It will be appreciated that the use of electricity produced by a small PEM fuel cell power stack to provide electrical power to operate electrical equipment in an internal combustion vehicle and to start the engine in the vehicle will allow one to dispense with the conventional large twelve volt battery in vehicles completely. This will decrease the weight of the vehicle and provide a more durable electrical power source for the vehicle than is now the case.

Since many changes and variations of the disclosed embodiment of the invention may be made without departing from the inventive concept, it is not intended to limit the invention otherwise than as required by the appended claims.

## Claims

1. A motor vehicle comprising an internal combustion engine driving the motor vehicle, also comprising an auxiliary fuel cell power plant (2) mounted in the vehicle, the latter comprising a battery (4) for providing start up power for said auxiliary fuel cell power plant; the vehicle further comprising an electric powered starter for the internal combustion engine,
**characterized in that** the electrical power from said auxiliary fuel cell power plant can be directed to said starter to activate the latter to start the internal combustion engine, as the electric capacity of said battery is not sufficient for driving said starter in starting the engine.

2. A motor vehicle according to claim 1, further comprising a converter (8) operatively connected to said auxiliary fuel cell power plant for converting the voltage output of said auxiliary fuel cell power plant to a lower voltage, in particular to a twelve volt output.

3. A motor vehicle according to claim 1 or 2, wherein said auxiliary fuel cell power plant produces about forty two volts at full power.

4. A motor vehicle according to any of the preceding claims, further comprising at least one supplemental source (18) of electrical power selectively connected to said starter, said supplemental source being activated when power from said auxiliary fuel cell power plant is insufficient by itself to start the internal combustion engine.

5. A motor vehicle according to claim 4, wherein said supplemental source of electrical power includes one or more capacitors, in particular super capacitors.

6. A method for energizing a starter of an internal combustion engine of a motor vehicle, the latter comprising an auxiliary fuel cell power plant (2) mounted in the vehicle, with a battery (4) for providing start up power for said auxiliary fuel cell power plant,
**characterized in that** the auxiliary fuel cell power plant is activated so as to provide electric voltage output therefrom and that such voltage output from said auxiliary fuel cell power plant is used to energize the vehicle starter (10) so as to start the vehicle engine.

7. A method according to claim 6 further including the step of converting the voltage output from said auxiliary fuel cell power plant to a lower voltage, in particular to twelve volts.

8. A method according to claim 6 or 7 further comprising the step of activating at least one supplemental source (18) of electrical power selectively connected to said starter if the power provided by the auxiliary fuel cell power plant is not sufficient to start the vehicle engine.

9. A method according to claim 8 wherein said supplemental source of electrical power includes one or more capacitors, in particular super capacitors.
